**Europäisches Patentamt**

**European Patent Office**

**Office européen des brevets**

(11) Publication number : **0 485 325 A1**

## (12) EUROPEAN PATENT APPLICATION

(21) Application number : **91810763.2**

(22) Date of filing : **27.09.91**

(51) Int. Cl.⁵ : **B29C 65/00, // B29K23:00**

(30) Priority : **08.11.90 IT 2199990**

(43) Date of publication of application :
**13.05.92 Bulletin 92/20**

(84) Designated Contracting States :
**AT BE DE DK ES FR GB GR LU NL SE**

(71) Applicant : **Calastri, Ivan**
**Via Volta 25**
**I-22035 Canzo (CO) (IT)**

(72) Inventor : **Calastri, Ivan**
**Via Volta 25**
**I-22035 Canzo (CO) (IT)**

(74) Representative : **Baggiolini, Raimondo et al**
**Patent Attorneys**
**Fiammenghi-Fiammenghi-Racheli Via San**
**Gottardo 15**
**CH-6900 Lugano (CH)**

(54) **Machine for heat sealing of polypropylene and compounds.**

(57)    The machine (1) for heat sealing comprises a single heat sealing mold (13) placed in a position facing a working plane (3) on which the materials (8, 9) to be welded are carefully placed. Between mold (13) and the material to be welded (8, 9) is interposed a continuous strip (15) of a film of a material that is heat-resistant but heat conductive, and the machine is provided with equipment (16) able to move it, during working, with respect to the heat sealing mold (13).

The temperature of mold (13) can thus be raised to beyond 300°C, shortening the working times and making it possible to weld polypropylene.

EP 0 485 325 A1

The invention relates to a set of improvements in heat sealing machines, which make it possible to weld together two films of polypropylene and compounds, to make bags, envelopes, document pockets and the like, substantially retaining the equipment used so far for welding PVC films and the like.

It is known that for making the above articles, machines are used now equipped with two heat sealing molds, an upper and a lower mold, brought to different temperatures, to obtain an optimal welding between films even of different thickness placed between them.

To avoid direct contact between the lower mold and the material to be welded, normally a film with a high heat resistance and conductive of heat is interposed, which obviously undergoes a deformation and wear and therefore has to be constantly replaced after some work cycles.

It should be noted that said isolating film in most cases is manually positioned by the operator, who is under obvious dangerous working conditions by operating close to heat sources.

The machine under discussion in practice solves said drawbacks, reduces the cost of the equipment used and increases its productivity, while basically allowing producers to use welding equipment already in their possession. The object of the invention is a machine particularly suited to heat sealing of polypropylene and compounds, characterized by the fact of comprising a single heat sealing mold, located in a position facing a working plane on which the materials to be welded are carefully placed.

Actually there is provided the use of a single heated mold located, for example in the example that will be described, in the upper part of the machine, while the material to be welded is supported on the working plane, generally equipped with a continuous mat for the transfer of the welded produced articles to packaging. Further, between the mold and the material to be welded is interposed a stationary or mobile strip of heat-resistant material that acts as a separator between the heated mold itself and the produced article on the working plane. This makes it possible to bring the temperature of the single mold to about 300°C, with the advantage of performing the welding in a very short time and not risking the adhesion and melting of the material being worked. It is important to note that, with the machine according to the invention, it is thus possible to weld polypropylene, intended more and more to replace PVC, a highly polluting material since during disposal in incinerators it develops dioxin and other toxic gases, whose complete ban in the very near future is expected.

Finally, by using a continuous heat-resistant strip the inventor has made it possible to move it with respect to the heat sealing mold during working, so as not to subject the same working surface to the same thermal stress of the welding, for example by making it run cyclically or moving it alternately or also with other similar methods.

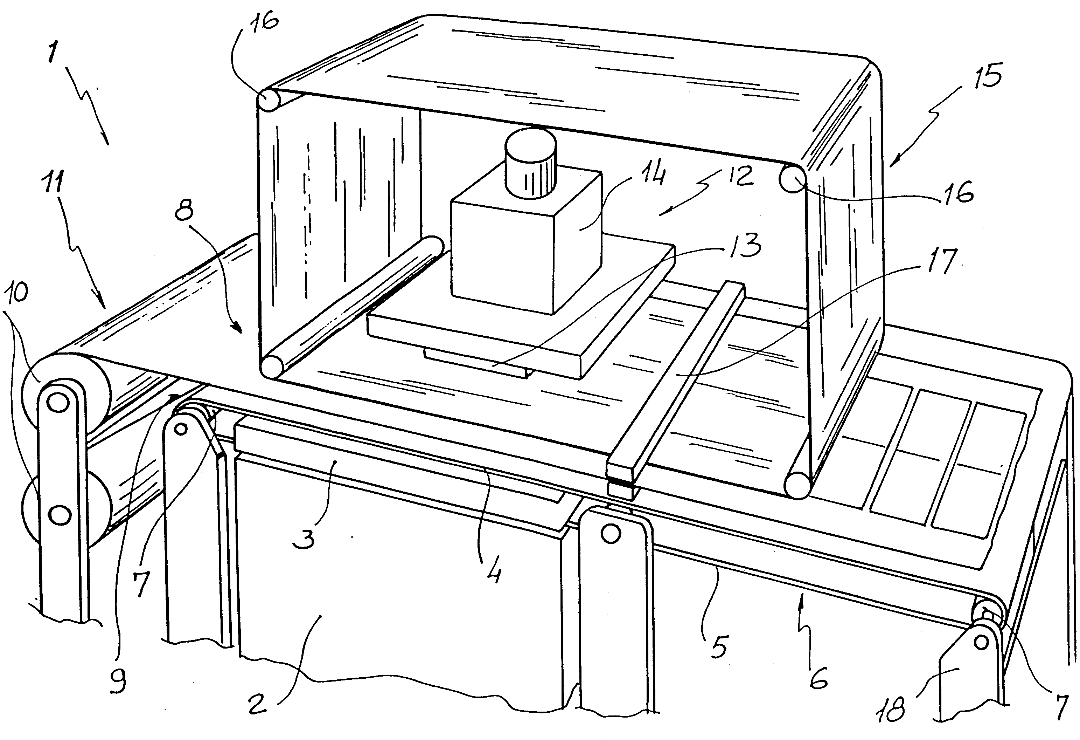

This and other characteristics of the invention will be shown better in the following detailed description in a preferred embodiment, purely by way of illustrative and nonlimiting example of the scope of the invention, and with reference to the accompanying drawing in which is represented, in diagrammatic perspective view, a machine for heat sealing of film of polypropylene and compounds, according to the present invention.

With reference to said diagram drawing, machine 1 for welding polypropylene and compounds comprises a central barometer 2, on which is placed working plane 3 inserted between upper fabric 4 and lower fabric 5 of a continuously running mat 6 driven by two rollers 7 placed at the ends of the working field.

On conveyor mat 6 are carefully placed two films 8, 9 of polypropylene or similar compounds taken from reels 10 placed at head 11 of machine 1.

In upper part 12 is single heat sealing mold 12 automatically operated by an electropneumatic set 14 of a known type and represented only diagrammatically in the drawing.

Between mold 13 and the material to be welded, to avoid direct contact, is interposed a continuous strip 15 that is heat-resistant but conductive of heat, moved by suitable rollers 16 by suitable motorizing (not shown in the figure), or drawn by pneumatic tongs. This arrangement makes it possible to bring mold 13 to a working temperature of about 300°C in comparison with 120/180°C of present systems, with obvious better output and welding security, and possibility of using the same equipment now used for welding PVC.

Finally, in the immediate vicinity of the welding zone is placed an automatic cutter 17 of known type for cutting the finished produced articles.

All that has been mentioned is obviously installed on a support frame 18 of known type, represented only diagrammatically in the drawing.

However, the heating electrode could be applied to the stationary part of the machine instead of the mobile part, or also in another position, without altering the principle on which it is based.

Finally, the fact should be noted that numerous modifications, additions, variations or substitutions of elements can made to this invention, without going outside the scope of protection as defined in the attached claims.

**Claims**

1.  Machine particularly suited for heat sealing of polypropylene and compounds, characterized in that it comprises a single heat sealing mold (13) placed in a position facing working position (3) on which are carefully placed the materials to be welded (8, 9).

2. Machine according to claim 1, wherein it comprises a film of continuous strip (15) of heat-resistant material but heat conductive interposed between mold (13) and the material (8, 9) to be welded to avoid direct contact.

3. Machine according to claim 2, wherein it comprises equipment (16) suitable for moving the continuous strip of heat-resistant material with respect to heat sealing mold (13) during working.

4. Machine according to claims 1 and 2, wherein the temperature of the mold can be raised to beyond 300°C, shortening working times.

**European Patent Office**

# EUROPEAN SEARCH REPORT

Application Number

EP 91 81 0763

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 524 783 (SUTHERLAND)<br>* Column 1, lines 33-34,45; claim 1; figure 2 *<br>--- | 1-4 | B 29 C 65/00 //<br>B 29 K 23:00 |
| X | PATENT ABSTRACTS OF JAPAN, vol. 8, no. 43 (M-279)[1480], 24th February 1984; & JP-A-58 199 116 (FUJI KIKAI SEISAKUSHO K.K.) 19-11-1983<br>--- | 1 | |
| X | FR-A-1 603 221 (JAGET)<br>* Fig.; page 1, line 6 *<br>--- | 1 | |
| X | US-A-3 960 636 (MOFFITT)<br>* Fig.; column 1, lines 7-10 *<br>--- | 1 | |
| X | EP-A-0 370 798 (MITSUI PETROCHEMICAL)<br>* Claims 1,2; page 4, lines 2-3 *<br>--- | 1 | |
| A | US-A-3 206 909 (HANES)<br>* Figure 4; column 2, line 59 - column 3, line 3; column 4, lines 32-54; column 5, line 64 - column 6, line 14 *<br>--- | 1-3 | |
| A | EP-A-0 335 270 (NYBORG)<br>* Fig.; claim 1 *<br>--- | 1-3 | TECHNICAL FIELDS SEARCHED (Int. Cl.5)<br><br>B 29 C |
| A | EP-A-0 387 373 (HINTERSEER)<br>* Fig.; column 8, line 38 *<br>--- | 1-3 | |
| A | AT-B- 192 114 (HAMMER)<br>* Fig.; claim 1 *<br>--- | 1-3 | |
| A | AT-B- 316 855 (GLOUCESTER ENG.)<br>* Figure 3, ref. 44 *<br>--- | 1-2 | |
| A | FR-A-2 225 247 (VELCRO FRANCE)<br>* Fig. *<br>----- | 2,3 | |

The present search report has been drawn up for all claims

| Place of search | Date of completion of the search | Examiner |
|---|---|---|
| THE HAGUE | 29-01-1992 | CORDENIER J. |

EPO FORM 1503 03.82 (P0401)